# EUROPÄISCHE PATENTSCHRIFT

(11) **EP 1 626 941 B1**
(45) Veröffentlichungstag und Bekanntmachung des Hinweises auf die Patenterteilung: **27.09.2006**
(21) Anmeldenummer: 04732585.7
(22) Anmeldetag: 13.05.2004
(51) Int. Cl.: C04B 7/40, F26B 17/10, F26B 23/00, F27B 7/20

(54) **VERFAHREN UND ANLAGE ZUR THERMISCHEN TROCKNUNG EINES NASS VERMAHLENEN ZEMENTROHMEHLS**
METHOD AND A PLANT FOR THERMALLY DRYING WET-GROUND RAW MEAL
PROCEDE ET INSTALLATION DE DESSICCATION THERMIQUE D'UNE FARINE CRUE DE CIMENT MOULUE PAR VOIE HUMIDE

(30) Priorität: 26.05.2003 DE 10323774
(43) Veröffentlichungstag der Anmeldung: 22.02.2006
(73) Patentinhaber: KHD Humboldt Wedag GmbH, 51170 Köln (DE)
(72) Erfinder: JOCHEM, Matthias, 51688 Wipperfürth (DE); KÜHNE, Klaus, 06846 Dessau (DE)
(86) Internationale Anmeldenummer: PCT/EP2004/005116
(87) Internationale Veröffentlichungsnummer: WO 2004/103927

(56) Entgegenhaltungen:
- DE-A- 2 364 796
- DE-A- 2 400 100
- DE-A- 3 711 145
- DE-A- 4 340 382
- GB-A- 199 056

## Beschreibung

Die Erfindung betrifft ein Verfahren zur thermischen Trocknung eines nass vermahlenen als Schlamm vorliegenden Zementrohmehls zwecks Herstellung eines Trockenmehls, das in das Zyklonschwebegas-Wärmetauschersystem einer nach dem Trockenverfahren arbeitenden Zementklinkerproduktionslinie eingeführt wird, mit einem Trockner mit Verwertung der in den Abgasen des Zyklonschwebegas-Wärmetauschersystems enthaltenen Abwärme und mit Abtrennung des Trockenmehls von den bei der Trocknung gebildeten Brüden. Außerdem betrifft die Erfindung eine Anlage zur Durchführung des Verfahrens.

Beim sogenannten Nassverfahren zur Herstellung von Zementklinker werden Rohstoffe in Rohrmühlen nass vermahlen, um auf diese Weise einen feinkörnigen und innig vermischten Rohschlamm zu erhalten. Dieser Rohschlamm wird dosiert in einen sehr langen Drehrohrofen eingeführt, dort getrocknet und zu Zementklinker gebrannt. Es versteht sich, dass bei der Trocknung die komplette Verdampfungswärme zum Abgasverlust bei solchen Nassdrehrohröfen beiträgt.

Im Laufe der Zeit hat sich zur Zementklinkerherstellung das thermisch günstigere Trockenverfahren durchgesetzt, bei dem trocken vermahlene Rohstoffe in einem vergleichsweise kurzen Drehrohrofen mit vorgeschaltetem Zyklonschwebegas-Wärmetauschersystem zu Zementklinker gebrannt werden.

Beim Umbau vorhandener Nassanlagen in moderne Trockenanlagen ist es bekannt, die Nassaufbereitung des Rohmaterials beizubehalten und das schlammförmig vorliegende Rohmaterial, d. h. den Rohmehlschlamm durch eine mechanische und anschließend thermische Entwässerung in den für die Aufgabe in den Zyklonschwebegas-Wärmetauscher erforderlichen Trockengrad zu überführen. So ist es aus der DE-A-43 40 382 bekannt, einen Rohmehlschlamm in einer Filterpresse mechanisch zu entwässern, den Filterkuchen in einem Trocknersystem mit Verwertung der Abwärme der Zementklinkerproduktionslinie thermisch zu trocknen und das getrocknete Rohmehl einem Zyklonschwebegas-Wärmetauschersystem aufzugeben, in einer Calcinierstufe zu calcinieren und in einem Drehrohrofen zu Zementklinker zu brennen, der in einem Klinkerkühler gekühlt wird. Das Trocknersystem ist dabei ein sogenannter Flugstromtrockner, umfassend einen von Heißgas durchströmten Prallhammerbrecher, eine Steigleitung, einen Separator mit Rezirkulierung von Grobkorn zum Prallhammerbrecher und einen Abscheider z. B. Filter zur Trennung des getrockneten Rohmehls vom Trocknungsgas.

Nachteilig bei dieser bekannten Zementklinkerherstellung ist der für die mechanische Entwässerung und Trocknung des Filterkuchens getriebene apparative Aufwand, insbesondere der Einsatz des Prallhammerbrechers bzw. Trocknungsbrechers mit rotierenden Maschinenteilen. So muss beispielsweise der Prallhammerbrecher des bekannten Flugstromtrockners in seiner Größe und Leistung so dimensioniert werden, dass die Hämmer auch bei nicht ausreichender Trocknungsleistung durch das noch feuchte Material am Prallhammerbrecherboden durchgezogen werden können. Hinzu kommt der vergleichsweise hohe Verschleiß des Prallhammerbrechers bzw. Rotationstrockners verursacht durch die mit hoher Drehzahl rotierenden Einbauten. Bei dem bekannten Flugstromtrocknersystem lässt sich nicht vermeiden, dass der größere Teil der Wasserverdampfungsenthalpie dem Abgasverlust zuzurechnen ist. Daher kann die Umstellung eines vorhandenen Nassverfahrens zur Herstellung von Zementklinker auf ein Trockenverfahren unwirtschaftlich werden, wenn man bedenkt, dass der spezifische Wärmeenergiebedarf einer derartig umgebauten Zementklinkerproduktionslinie immer noch ca. 900 kcal/kg Klinker beträgt.

Aus der US-A-3,654,705 ist ein Wirbelbetttrockner mit Einsatz von Sattdampf zur Trocknung eines 96 % Wasser enthaltenden Klärschlamms bekannt. Ein Wirbelschichttrockner lässt sich aber nicht mit so feinkörnigen Feststoffen einer Feinheit betreiben, wie sie Zementrohmehl aufweisen muss, nämlich Feinheit 85 % < 90 µm, was der üblichen Zementrohmehlfeinheit entspricht.

Der Erfindung liegt die Aufgabe zugrunde, bei der Herstellung von Zementklinker aus nass vermahlenem als Schlamm vorliegenden Zementrohmehl insbesondere beim Umbau vorhandener Nassanlagen in Trockenanlagen den apparativen Aufwand bei der Schlammentwässerung und Schlammtrocknung zu senken und vor allem bei der thermischen Schlammtrocknung die mit der Brüdenbildung verbundenen Abwärmeverluste möglichst gering zu halten.

Diese Aufgabe wird gemäß der Erfindung verfahrensmäßig mit den Maßnahmen des Anspruchs 1 und vorrichtungsmäßig mit den Merkmalen des Anspruchs 4 gelöst. Vorteilhafte Ausgestaltungen der Erfindung sind in den Unteransprüchen angegeben.

Beim erfindungsgemäßen Verfahren findet die thermische Trocknung des Zementrohmehlschlamms in einem Dampf-Flugstrom-Trockner statt, in dessen unteren Bereich der pumpfähige Rohmehlschlamm direkt eingedüst wird. Maschinen zur mechanischen Entwässerung des Rohmehlschlamms wie z. B. Zentrifugen, Filterpressen etc. entfallen. Unterhalb des Bereiches der Rohschlammeindüsung wird in den Dampf-Flugstrom-Trockner ein Brüdenstrom eingeführt, der oben aus dem Trockner abgezogen und nach Abtrennung des getrockneten Mehls als Brüdenumwälzstrom im Kreislauf in den Trockner rezirkuliert wird. Vor seiner Einführung in den unteren Bereich des Trockners wird der rezirkulierte Brüdenumwälzstrom durch indirekte Wärmeübertragung aus den Abgasen des Zyklonschwebegas-Wärmetauscher-Systems der Zementklinkerproduktionslinie erhitzt.

Ein Brüdenmengenteilstrom, der dem durch die Rohmehlschlammtrocknung verdampften Wasser entspricht, wird dem Brüdenkreislaufstrom entzogen und nach Anheben des Brüdentemperaturniveaus über einen Brüdenverdichter und nach Durchströmen einer im Trockner angeordneten Brüdenkondensationsheizfläche als Kondensat abgezogen, wobei der abgezogene Brüdenkondensatstrom durch indirekte Wärmeübertragung noch den in den Trockner einzudüsenden Zementrohmehlschlamm vorwärmen kann.

Der Hauptvorteil des erfindungsgemäßen Verfahrens liegt in der nahezu vollständigen Rückgewinnung der Wasserverdampfungsenthalpie der Trocknerbrüden, wodurch der spezifische Wärmeenergiebedarf einer in erfindungsgemäßer Weise umgebauten Zementklinkerproduktionslinie dem spezifischen Wärmeenergiebedarf einer nach dem Trockenverfahren arbeitenden Zementklinkerproduktionslinie von ca. 720 kcal/kg Klinker nahe kommt.

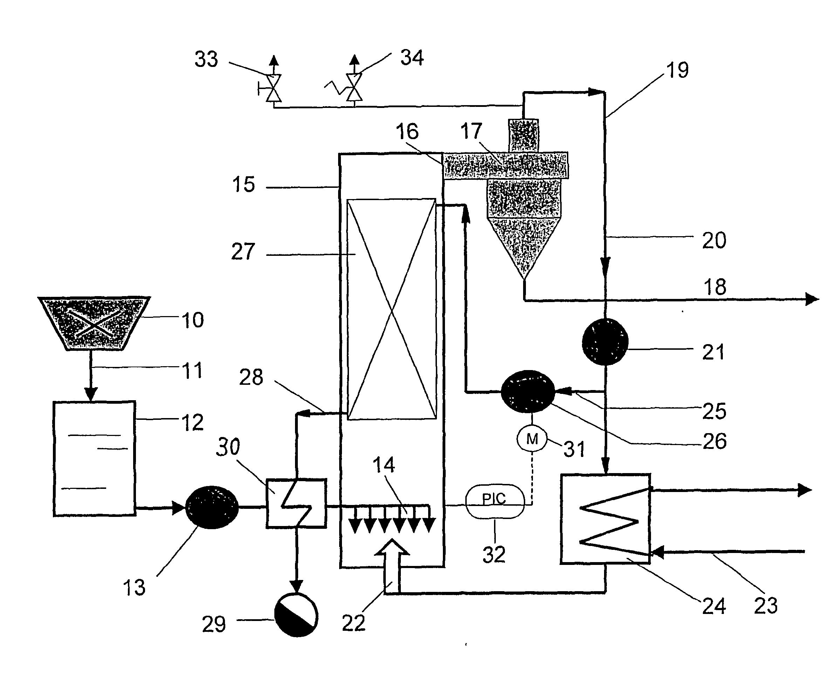

Die Erfindung und deren weitere Merkmale und Vorteile werden anhand des in der Zeichnung schematisch dargestellten Ausführungsbeispieles näher erläutert.

Die Zeichnung zeigt das erfindungsgemäße Verfahren bzw. die entsprechende Anlage zur thermischen Trocknung eines aus einer Nassmahlung 10 kommenden Zementrohmehlschlamms 11, der mit einem Wassergehalt von etwa 35 % in einen Schlammtank 12 eingeleitet wird, aus dem der Schlamm mittels der Pumpe 13 und der Düseneinrichtung 14 in den unteren Bereich eines thermischen Trockners 15 eingedüst wird, der als von unten nach oben durchströmter steigschachtförmiger Dampf-Flugstrom-Trockner ausgebildet ist. Der Dampf-Flugstrom-Trockner 15 weist an seiner Oberseite eine Austragsöffnung 16 auf, die mit einem Zyklonabscheider 17 zur Abtrennung des Trockenmehls 18 vom aus der Wasserverdampfung im Trockner herrührenden Brüdenstrom 19 verbunden ist, der mit einer Temperatur von ca. 120° C über eine Brüdenrezirkulationsleitung 20 mit Brüdenumwälzgebläse 21 in den unteren Bereich des Dampf-Flugstrom-Trockners 15 unterhalb der Schlammeindüsung 14 eingeführt wird.

In der Brüdenrezirkulationsleitung 20 ist zwischen dem Brüdenumwälzgebläse 21 und der Leitungseinführung 22 in den Trockner 15 ein mit Abgasen 23 des Zyklonschwebegas-Wärmetauschersystems der Zementklinkerproduktionslinie betriebener indirekter Wärmeübertrager 24 angeordnet, der den rezirkulierten Brüdenumwälzstrom vor Einführung in den Trockner 15 von ca. 120° C auf ca. 270° C erhitzt, wobei sich die Abgase 23 des Zyklonschwebegas-Wärmetauschersystems im Wärmeübertrager 24 von ca. 350° C auf ca. 200° C abkühlen.

Von der Brüdenrezirkulationsleitung 20 ist an der Druckseite des Brüdenumwälzgebläses 21 eine Brüdenabzweigleitung 25 abgezweigt, die über einen Brüdenverdichter 26 mit dem Dampfeingang einer innerhalb des Dampf-Flugstrom-Trockners 15 angeordneten Brüdenkondensationsheizfläche 27 verbunden ist, deren Kondensatauslass 28 mit einem Kondensatableiter 29 in Verbindung steht. Über die Brüdenabzweigleitung 25 wird ein Brüdenmengenteilstrom, der dem durch die Rohmehlschlammtrocknung verdampften Wasser entspricht, dem Brüdenkreislaufstrom entzogen und nach Anheben des Brüdendruckniveaus über den Brüdenverdichter 26 und nach Durchströmen der Brüdenkondensationsheizfläche 27 als Kondensat abgezogen.

Der in den Dampf-Flugstrom-Trockner 15 gepumpte Rohmehlschlamm wird vor seiner Eindüsung 14 in den Trockner im indirekten Wärmeübertrager 30 durch den 120 bis 160°C heißen Brüdenkondensatstrom 28 auf ca. 70° C vorgewärmt. Die eingedüsten Tropfen werden vom aufsteigenden Wasserdampf (Brüden)-Umwälzstrom 20 erfasst, sehr schnell auf Sättigungstemperatur (100° C) erwärmt und nach oben mitgerissen. In der Brüdenkondensationsheizfläche 27 erfolgt anschließend die vollständige Verdampfung des Wassergehaltes durch Wärmeübertragung von der ca. 20 bis 60° C heißeren Heizfläche.

Die Förderleistung des Brüdenverdichters 26 wird so geregelt, dass sich im Dampf-Flugstrom-Trockner 15 kein Überdruck aufbaut. Dazu steht der Antriebsmotor 31 des Brüdenverdichters 26 mit einem mit dem Trockner 15 in Wirkverbindung stehenden Druckregler 32 in Verbindung. Der Druck der Brüden beträgt auf der Saugseite des Brüdenverdichters 26 ca. 1 bar und auf der Druckseite ca. 2 bis 6 bar, was der o. g. Brüdenkondensationstemperatur von ca. 120 bis 160° C entspricht.

Zum Zwecke des Anfahrens der erfindungsgemäßen Trocknungseinrichtung und aus Sicherheitsgründen ist das System noch mit einer Anfahrentlüftung 33 und mit einem Sicherheitsventil 34 ausgestattet.

Jedenfalls hat das dem Zyklonschwebegas-Wärmetauschersystem einer Zementklinkerproduktionslinie aufzugebende getrocknete Rohmehl 18 einen Wassergehalt < 1 % und die erforderliche Rohmehlfeinheit von etwa 85 % < 90 µm.

## Patentansprüche

1. Verfahren zur thermischen Trocknung eines nass vermahlenen als Schlamm vorliegenden Zementrohmehls zwecks Herstellung eines Trockenmehls (18), das in das Zyklonschwebegas-Wärmetauschersystem einer nach dem Trockenverfahren arbeitenden Zementklinkerproduktionslinie eingeführt wird, mit einem Trockner mit Verwertung der in den Abgasen des Zyklonschwebegas-Wärmetauschersystems enthaltenen Abwärme und mit Abtrennung des Trockenmehls (18) von der bei der Trocknung gebildeten Brüden (19),
**gekennzeichnet durch** folgende Merkmale:
a) in den unteren Bereich des als Dampf-Flugstrom-Trockner (15) ausgebildeten Trockners werden der pumpfähige Rohmehlschlamm (14) sowie ein Brüdenstrom (22) eingeführt, der oben aus dem Trockner abgezogen und nach Abtrennung des Trockenmehls als Brüdenumwälzstrom (20) im Kreislauf in den Trockner rezirkuliert wird,
b) der rezirkulierte Brüdenumwälzstrom (20) wird vor Einführung in den unteren Bereich des Trockners (15) **durch** indirekte Wärmeübertragung (24) aus den Abgasen des Zyklonschwebegas-Wärmetauschersystems erhitzt,
c) ein Brüdenmengenteilstrom (25), der dem **durch** die Rohmehlsschlammtrocknung verdampften Wasser entspricht, wird dem Brüdenkreislaufstrom entzogen und nach Anheben des Brüdentemperaturniveaus über einen Brüdenverdichter (26) und nach Durchströmen einer im Trockner (15) angeordneten Brüdenkondensationsheizfläche (27) als Kondensat (28) abgezogen.

2. Verfahren nach Anspruch 1,
**dadurch gekennzeichnet, dass** der in den Dampf-Flugstrom-Trockner (15) gepumpte Rohmehlschlamm vor seiner Eindüsung (14) in den Trockner durch indirekte Wärmeübertragung (30) aus dem abgezogenen Brüdenkondensatstrom (28) vorgewärmt wird.

3. Verfahren nach Anspruch 1,
**dadurch gekennzeichnet, dass** die Förderleistung des Brüdenverdichters (26) so geregelt (32, 31) ist, dass sich im Dampf-Flugstrom-Trockner (15) kein Überdruck aufbaut.

4. Anlage zur thermischen Trocknung eines nass vermahlenen als Schlamm vorliegenden Zementrohmehls zwecks Herstellung eines Trockenmehls (18), das in das Zyklonschwebegas-Wärmetauschersystem einer nach dem Trockenverfahren arbeitenden Zementklinkerproduktionslinie eingeführt wird, mit einem Trockner mit Verwertung der in den Abgasen des Zyklonschwebegas-Wärmetauschersystems enthaltenen Abwärme und mit Abtrennung des Trockenmehls (18) von den bei der Trocknung gebildeten Brüden (19),
**gekennzeichnet durch** folgende Merkmale:
a) der Trockner ist als steigschachtförmiger Dampf-Flugstrom-Trockner (15) ausgebildet mit einer Eindüsung (14) des zu trocknenden Rohmehlschlamms in den unteren Trocknerbereich und mit im oberen Bereich angeordneter Austragsöffnung (16), die mit einem Zyklonabscheider (17) zur Abtrennung des Trockenmehls (18) vom Brüdenstrom (19) verbunden ist, der über eine Brüdenrezirkulationsleitung (20) mit Brüdenumwälzgebläse (21) in den unteren Trocknerbereich eingeführt ist,
b) in der Brüdenrezirkulationsleitung (20) ist zwischen dem Brüdenumwälzgebläse (21) und der Leitungseinführung (22) in den Trockner (15) ein mit Abgasen (23) des Zyklonschwebegas-Wärmetauschersystems betriebener indirekter Wärmeübertrager (24) angeordnet,
c) von der Brüdenrezirkulationsleitung (20) ist an der Druckseite des Brüdenumwälzgebläses (21) eine Brüdenabzweigleitung (25) abgezweigt, die über einen Brüdenverdichter (26) mit dem Dampfeingang einer innerhalb des Dampf-Flugstrom-Trockners (15) angeordneten Brüdenkondensationsheizfläche (27) verbunden ist, deren Kondensatauslass (29) mit einem Kondensatableiter (29) in Verbindung steht.

## Claims

1. Method for thermally drying a wet-milled cement raw meal which is present in the form of a slurry for the purpose of producing a dry meal (18) which is introduced into the cyclone suspension heat exchanger system of a cement clinker production line operating according to the dry method, having a dryer for utilizing the waste heat contained in the exhaust gases from the cyclone suspension heat exchanger system, and with separation of the dry meal (18) from the vapours (19) formed during the drying, **characterized by** the following features:
a) the pumpable raw meal slurry (14) and a vapour stream (22), which is extracted from the top of the dryer and, after the dry meal has been separated off, is recirculated into the dryer as a recirculated vapour stream (20), are introduced into the lower region of the dryer, which is designed as a steam/entrained-flow dryer (15),
b) the recirculated vapour stream (20), before being introduced into the lower region of the dryer (15), is heated by indirect heat transfer (24) from the exhaust gases of the cyclone suspension heat exchanger system,
c) a vapour quantitative part-stream (25) corresponding to the water evaporated by the raw meal slurry drying is removed from the vapour cycle stream and, after the vapour temperature level has been increased by means of a vapour compressor (26) and after it has flowed through a vapour condensation heating surface (27) arranged in the dryer (15), is removed as condensate (28).

2. Method according to Claim 1, **characterized in that** the raw meal slurry which has been pumped into the steam/entrained-flow dryer (15), before being injected (14) into the dryer, is preheated by indirect heat transfer (30) from the vapour condensate stream (28) which has been removed.

3. Method according to Claim 1, **characterized in that** the delivery capacity of the vapour compressor (26) is controlled (32, 31) in such a way that an excess pressure does not build up in the steam/entrained-flow dryer (15).

4. Plant for thermally drying a wet-milled cement raw meal which is present in the form of a slurry for the purpose of producing a dry meal (18) which is introduced into the cyclone suspension heat exchanger system of a cement clinker production line operating according to the dry method, having a dryer for utilizing the waste heat contained in the exhaust gases from the cyclone suspension heat exchanger system, and with separation of the dry meal (18) from the vapours (19) formed during the drying, **characterized by** the following features:
a) the dryer is designed as a rising-shaft steam/entrained-flow dryer (15) with injection (15) of the raw meal slurry that is to be dried into the lower region of the dryer and with discharge opening (16) which is arranged in the upper region and is connected to a cyclone separator (17) for separating the dry meal (18) from the vapour stream (19), which is introduced into the lower region of the dryer via a vapour recirculation line (20) with vapour recirculation fan (21),
b) an indirect heat transfer means (24), which is operated with exhaust gases (23) from the cyclone suspension heat exchanger system, is arranged in the vapour recirculation line (20) between the vapour recirculation fan (21) and the point (22) at which the line is introduced into the dryer (15),
c) a vapour branch line (25) branches off from the vapour recirculation line (20) on the pressure side of the vapour recirculation fan (21), which vapour branch line (25) is connected, via a vapour compressor (26), to the steam entry of a vapour condensation heating surface (27) which is arranged inside the steam/entrained-flow dryer (15) and the condensate outlet (29) of which is connected to a condensate discharge (29).

## Revendications

1. Procédé pour sécher thermiquement une farine crue de ciment moulue par voie humide existant sous forme de boue en vue de préparer une farine sèche (18), qui est introduit dans le système échangeur de chaleur à cyclone et à gaz de suspension d'une chaîne de production de clinker fonctionnant selon le procédé à sec, avec un sécheur exploitant la chaleur dissipée contenue dans les effluents gazeux du système échangeur de chaleur à cyclone et à gaz de suspension et en séparant la farine sèche des vapeurs (19) formées pendant le séchage, **caractérisé par** les particularités suivantes :
a) la boue de farine crue (14) susceptible d'être pompée ainsi qu'un courant de vapeurs (22) sont introduits dans la région inférieure du sécheur formé en tant que sécheur de courant aérien de vapeur d'eau (15), courant qui est soutiré par le haut du sécheur et qui, après séparation de la farine sèche est recyclé dans le circuit du système échangeur de chaleur à cyclone et à gaz de suspension, en tant que courant de circulation de vapeurs (20),
b) le courant de circulation de vapeurs (20) recyclé avant d'être introduit dans la région inférieure du sécheur (15) est chauffé par transfert de chaleur (24) indirect à partir des effluents gazeux du système échangeur de chaleur à cyclone et à gaz de suspension,
c) un courant partiel de vapeurs (25), qui correspond à l'eau vaporisée par le séchage de la boue de farine crue, est extrait du courant de vapeurs recyclé et soutiré sous forme de condensat (28) après élévation du niveau de température des vapeurs par l'intermédiaire d'un compresseur de vapeurs (26) et après passage à travers une surface de chauffe (27) pour condensation des vapeurs, disposée dans le sécheur (15).

2. Procédé selon la revendication 1,
**caractérisé en ce que** la boue de farine crue pompée dans le sécheur de courant aérien de vapeur d'eau (15) avant son injection par buse (14) dans le sécheur, est préchauffée par transfert de chaleur (30) indirect à partir du courant de condensat de vapeurs (28).

3. Procédé selon la revendication 1,
**caractérisé en ce que** le débit du compresseur de vapeurs (26) est réglé (32, 31) de façon à ce qu'il ne se constitue pas de surpression dans le sécheur de courant aérien de vapeur d'eau (15).

4. Installation pour sécher thermiquement une farine crue de ciment moulue par voie humide existant sous forme de boue en vue de préparer une farine sèche (18), qui est introduit dans le système échangeur de chaleur à cyclone et à gaz de suspension d'une chaîne de production de clinker fonctionnant selon le procédé à sec, avec un sécheur exploitant la chaleur dissipée contenue dans les effluents gazeux du système échangeur de chaleur à cyclone et à gaz de suspension et en séparant la farine sèche (18) des vapeurs (19) formées pendant le séchage, **caractérisé par** les particularités suivantes :
a) le sécheur est formé en tant que sécheur de courant aérien de vapeur d'eau (15) avec une injection par buse (14) de la boue de farine crue à sécher dans la région inférieure du sécheur et avec une ouverture d'évacuation (16) disposée dans la région supérieure, qui est raccordée au séparateur à cyclone (17) pour séparer la farine sèche (18) du courant de vapeurs (19) qui est introduit dans la région inférieure du sécheur par l'intermédiaire d'une conduite de recyclage (20) des vapeurs avec une soufflante de circulation des vapeurs (21),
b) un dispositif de transfert de chaleur (24) indirect fonctionnant avec les effluents gazeux (23) du système échangeur de chaleur à cyclone et à gaz de suspension, est disposé dans la conduite de recyclage (20) des vapeurs entre la soufflante de circulation des vapeurs (21) et l'entrée de la conduite (22) dans le sécheur (15),
c) à partir de la conduite de recyclage (20) des vapeurs du côté pression de la soufflante de circulation des vapeurs (21), bifurque une conduite de dérivation (25) des vapeurs, qui est raccordée à l'entrée de la vapeur d'eau d'une surface de chauffe (27) pour condensation des vapeurs, disposée à l'intérieur du sécheur de courant aérien de vapeur d'eau (15), par l'intermédiaire d'un compresseur (26) de vapeurs, surface dont la sortie de condensat (29) est en communication avec un déflecteur de condensat (29).
